(19) Europäisches Patentamt

European Patent Office

Office européen des brevets

(11) Numéro de publication: **0 306 725 B1**

(12) **FASCICULE DE BREVET EUROPEEN**

(45) Date de publication de fascicule du brevet: **13.05.92** (51) Int. Cl.⁵: **G21D 3/06**, G21C 9/02

(21) Numéro de dépôt: **88113061.1**

(22) Date de dépôt: **11.08.88**

(54) **Procédé de protection d'un réacteur nucléaire à eau préssurisée contre les défaillances de son dispositif d'arrêt d'urgence.**

(30) Priorité: **24.08.87 FR 8711848**

(43) Date de publication de la demande:
**15.03.89 Bulletin 89/11**

(45) Mention de la délivrance du brevet:
**13.05.92 Bulletin 92/20**

(84) Etats contractants désignés:
**BE CH DE ES GB LI NL SE**

(56) Documents cités:
**EP-A- 0 185 455**
**FR-A- 2 349 922**
**US-A- 2 920 025**

(73) Titulaire: **FRAMATOME**
**Tour Fiat 1, Place de la Coupole**
**F-92400 Courbevoie(FR)**

(72) Inventeur: **Onfroy, Olivier**
**65 Boulevard du Maréchal-Joffre**
**F-92340 Bourg La Reine(FR)**

(74) Mandataire: **Patentanwälte Beetz sen. - Beetz**
**jun. Timpe - Siegfried - Schmitt-Fumian**
**Steinsdorfstrasse 10**
**W-8000 München 22(DE)**

Rank Xerox (UK) Business Services
(3.08/2.19/2.0)

# Description

La présente invention concerne la sécurité des réacteurs nucléaires à eau pressurisée et plus spécifiquement la protection d'un tel réacteur dans le cas où, d'une part, à la suite d'un incident, des paramètres mesurés de la chaudière atteignent des valeurs qui justifient un ordre d'arrêt d'urgence et où, d'autre part cet ordre n'est pas exécuté. L'incident en question peut être notamment une perte de l'eau alimentaire des générateurs de vapeur.

On va d'abord rappeler l'état de la technique concernant ces réacteurs et leur sécurité :
La chaudière nucléaire comprend généralement un réacteur à eau sous pression, un ou plusieurs générateurs de vapeur, une ou plusieurs pompes de circulation de l'eau primaire. Chacun des générateurs de vapeur associé à une ou plusieurs pompes et aux tuyauteries de raccordement constitue une boucle primaire.

Sur l'une des boucles primaires est raccordé une capacité fermée appelée pressuriseur dont la fonction, en phase de fonctionnement normal, est de maintenir de circuit primaire à une pression sensiblement constante, en particulier lors des transitoires de charge. La pression du circuit primaire est maintenue tantôt en ouvrant des vannes de décharge de la phase vapeur, ou en injectant de l'eau par aspersion tantôt en chauffant la partie liquide de pressuriseur grâce à des cannes chauffantes électriques qui sont implantées pour cela dans le fond inférieur de celui-ci. Ces moyens sont utilisés tantôt pour abaisser, tantôt pour élever la pression, suivant le fonctionnement de la chaudière.

Les générateurs de vapeur sont dans leur partie secondaire alimentés par de l'eau dite alimentaire qui est transformée en vapeur par échange thermique avec l'eau du circuit primaire. Cette vapeur alimente une turbine qui est associée mécaniquement à un alternateur, lequel débite sur le réseau de distribution électrique.

Dans le cas d'une perte d'eau alimentaire pour une raison quelconque, les systèmes de protection donnent un ordre d'arrêt d'urgence du réacteur. Cet ordre consiste à couper l'alimentation électrique des dispositifs de maintien des grappes de contrôle. Celles-ci s'insèrent alors totalement dans le coeur du réacteur y compris les grappes dites d'arrêt qui sont totalement extraites en fonctionnement normal.

Il convient d'envisager le cas, bien improbable, où à la suite d'un transitoire de fonctionnement anormal, un ordre d'arrêt d'urgence du réacteur a été donné mais n'est pas exécuté. Ce cas est connu des spécialistes sous la dénomination "défaillance de l'arrêt d'urgence au cours d'un transitoire". La perte du débit d'eau alimentaire à l'entrée d'un générateur de vapeur requiert, notamment, et de façon impérative, un arrêt d'urgence. Si malgré l'ordre donné dans une telle situation, l'arrêt d'urgence n'est pas exécuté, le circuit primaire n'est pas refroidi correctement. Dans ce cas la température du circuit primaire et en conséquence la pression de ce circuit augmentent de façon considérable. Cette dernière atteint des valeurs supérieures non seulement à la pression de tarage des soupapes de sureté, mais aussi à la pression d'essai du circuit primaire même alors que les soupages de sureté sont totalement ouvertes. Il y a donc un risque important de rupture du circuit primaire c'est-à-dire de perte de l'intégrité de l'une des trois barrières de confinement, la première barrière étant la gaine de combustible, la deuxième le circuit primaire et la troisième l'enceinte de confinement du réacteur.

Diverses dispositions connues peuvent éviter cette éventuelle rupture du circuit primaire.

Selon la demande de brevet français 2 349 922 un dispositif auxiliaire donne des ordres d'insertion de certains groupes de grappe dans le cas d'un arrêt des pompes d'eau alimentaire de façon à réduire la puissance du réacteur sans avoir à donner d'ordre d'arrêt d'urgence et de ce fait conserver la possibilité de faire remonter en puissance le réacteur le plus rapidement possible après redémarrage des pompes d'eau alimentaire.

Selon la demande de brevet européen EP-A-185 455 un dispositif indépendant du système de protection donne un ordre complémentaire à celui-ci, si le débit d'eau alimentaire est inférieur une valeur de seuil prédéterminée. De ce fait si l'ordre d'arrêt d'urgence n'est pas délivré pour une raison quelconque, le dispositif indépendant donne des ordres d'insertion des barres de contrôle afin de limiter la puissance neutronique et d'éviter ainsi une surpression dans le circuit primaire.

Dans la première demande, le procédé décrit permet sur un incident de réduire la puissance du réacteur, d'éviter de ce fait les inconvénients d'une surpression probable, de permettre un redémarrage rapide à la puissance désirée.

Dans la demande européenne EP-A-185455 la méthode décrite laisse supposer que les conditions d'arrêt d'urgence sont réalisées, mais que l'ordre n'en est pas donné par les dispositifs de protection. Il n'est pas évoqué le cas où l'ordre a réellement été délivré par de tels dispositifs sans avoir été suivi d'une exécution.

Pour éviter la surpression il a été proposé par ailleurs d'augmenter de façon importante la capacité de décharge des soupapes installées sur le circuit primaire ou d'augmenter la capacité du système d'eau alimentaire de secours.

On peut retarder également l'assèchement des générateurs de vapeur en arrêtant la turbine, en fermant partiellement le circuit de contournement de la vapeur, et en fermant les purges des générateurs de vapeur.

Ces dispositions connues entraînent des surcoûts importants dans la construction d'une chaudière.

Des incidents autres qu'une perte d'eau alimentaire peuvent requerir un arrêt d'urgence et devenir dangereux si l'ordre d'arrêt d'urgence correspondant n'est pas donné ou n'est pas exécuté. Une telle perte et de tels autres incidents constituent donc une espèce dangereuse d'incidents.

Le but de la présente invention est, dans le cas d'un incident de l'espèce dangereuse précédemment décrite, de maintenir l'intégrité des barrières de confinement et d'éviter en même temps un surdimensionnement excessif des circuits de sauvegarde, notamment des soupapes de sureté et du système d'eau alimentaire de secours des générateurs de vapeur.

Dans ce but la présente invention a pour objet un procédé de protection d'un réacteur nucléaire à eau pressurisée contre les défaillances de son dispositif d'arrêt d'urgence, le réacteur à protéger comportant

- un coeur qui est le siège d'une réaction nucléaire,
- des barres de contrôle et/ou d'arrêt pouvant pénétrer dans ce coeur,
- ledit dispositif d'arrêt d'urgence, ce dispositif étant apte à répondre à un ordre d'arrêt d'urgence en faisant pénétrer ces barres dans ce coeur de manière à arrêter cette réaction,
- et un circuit de refroissement primaire pour refroidir ce coeur par une eau primaire sous pression qui est entraînée par au moins une pompe primaire,
- ce procédé comportant les opérations suivantes :
- détection d'un incident éventuel d'une espèce dangereuse qui laisse d'abord subsister ledit circuit de refroidissement primaire du réacteur mais qui risque, après l'écoulement d'un délai, de faire monter la température et la pression dans ce circuit à des valeurs dangereuses susceptibles de le détériorer,
- et envoi d'un dit ordre d'arrêt d'urgence en cas de détection d'un tel incident,
- ce procédé étant caractérisé par le fait qu'il comporte en outre les opérations suivantes après le dit envoi d'ordre d'arrêt d'urgence :
- surveillance de l'exécution dudit ordre d'arrêt d'urgence avec élaboration d'un signal de défaillance du dispositif d'arrêt d'urgence si cet ordre n'a pas été exécuté,

- et arrêt de ladite pompe primaire en réponse à ce signal de défaillance, de manière qu'une élévation rapide et limitée de la température de l'eau dans ledit coeur ralentisse ladite réaction nucléaire suffisamment tôt pour empêcher cette température d'atteindre une dite valeur dangereuse après l'écoulement dudit délai.

Elle a plus particulièrement quoique non exlusivement pour objet un tel procédé applicable à un réacteur comportant en outre au moins un générateur de vapeur qui d'une part est parcouru par ladite eau primaire et qui d'autre part reçoit une eau alimentaire d'un circuit secondaire pour refroidir cette eau primaire,

- ce procédé comportant une surveillance du débit de ladite eau alimentaire,
- et ladite détection d'un incident d'une espèce dangereuse lorsqu'une diminution dangereuse de ce débit est constatée.

Le procédé selon l'invention permet de réduire très rapidement la puissance nucléaire du réacteur en utilisant un effet modérateur connu qui résulte de l'échauffement de l'eau primaire. Il a été trouvé en effet que cet effet était apte à provoquer un ralentissement suffisamment rapide de la réaction nucléaire, donc de la puissance du réacteur, avant l'assèchement complet des générateurs de vapeur. Il faut pour cela que cet échauffement soit suffisamment rapide dans le coeur du réacteur, ce qui est obtenu en arrêtant la circulation de l'eau primaire.

De préférence ledit ordre d'arrêt de ladite pompe primaire est arrêtée lorsqu'à la fois une dite diminution dangereuse du débit d'eau alimentaire a entraîné l'envoi d'un dit ordre d'arrêt d'urgence, un temps prédéterminé s'est écoulé depuis cet envoi, et un dit signal de défaillance est présent,

- ce signal étant représentatif du fait que la puissance de ladite réaction nucléaire est supérieure à un seuil prédéterminé après l'écoulement de ce temps prédéterminé.

L'invention sera mieux comprise en se référant aux figures annexées qui représentent :

Figure 1 : le schéma simplifié d'une centrale nucléaire.

Figure 2a, b, c: les courbes de pression, puissance nucléaire et puissance extraite du générateur de vapeur, respectivement, en fonction du temps, quand on utilise les procédés connus.

Figure 3a, b, c : les courbes correspondantes de pression, puissance nucléaire et puissance extraite du générateur de vapeur quand on utilise le procédé suivant l'invention.

Figure 4 : un schéma du dispositif d'arrêt des pompes primaires dans le procédé selon l'invention.

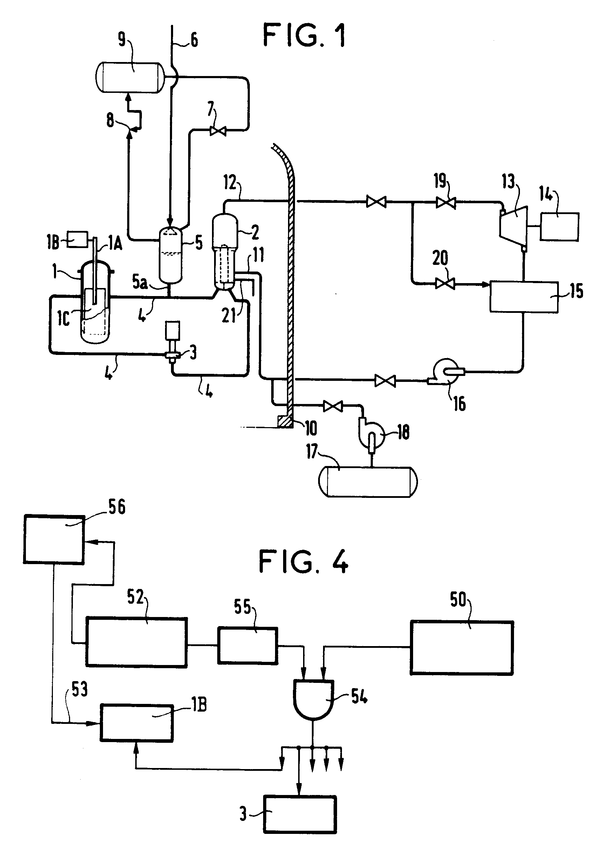

La figure 1 montre le schéma simplifié d'une centrale nucléaire qui comprend deux parties importantes : la chaudière de production de vapeur et la partie dite conventionnelle.

La chaudière comprend le réacteur qui comporte un coeur 1C, des barres de contrôle et d'arrêt 1a et un dispositif d'arrêt d'urgence 1B permettant de faire tomber ces barres dans ce coeur. Ce réacteur est associé à une ou plusieurs boucles qui comprennent chacune un générateur de vapeur 2, une pompe de circulation du fluide (eau) primaire 3 et les tuyauteries 4 associées. Sur l'une des boucles est raccordé le pressuriseur 5. Pour faciliter la compréhension une seule boucle est représentée sur la figure 1, celle où est installé le pressuriseur.

La fonction principale du pressuriseur est de maintenir la pression de fonctionnement dans le circuit primaire. Cette pression est maintenue soit en injectant de l'eau par aspersion dans le pressuriseur par l'intermédiaire de la ligne 6 soit en ouvrant les vannes de décharge 7 pour empêcher la pression de monter soit en chauffant la partie liquide contenue dans le pressuriseur avec des résistances chauffantes disposées sur le fond 5a pour empêcher la pression de descendre. Des soupapes de sûreté 8 sont installées sur le pressuriseur. Le fluide primaire en sortie des vannes 7 et des soupapes 8 est recueilli dans un réservoir de décharge 9. Tous les composants de la chaudière cités ci-dessus sont groupés dans l'enceinte de confinement repérée en 10 sur la figure 1.

La partie conventionnelle est située pour sa part la plus importante à l'extérieur de l'enceinte de confinement. L'entrée d'eau alimentaire 11 dans les générateurs de vapeur et la sortie de vapeur 12 de ceux-ci sont connectés à l'extérieur par des passages ou traversées de cette enceinte de confinement étanche.

Cette partie conventionnelle comprend la turbine à vapeur 13 qui est solidaire de l'alternateur 14 qui débite sur le réseau. A la sortie de la turbine 13 la vapeur traverse le condenseur 15. L'eau alimentaire récupérée en sortie de celui-ci est réinjectée à l'entrée 11 du générateur de vapeur par la pompe 16. Une réserve 17 d'eau alimentaire de secours est prévue pour être injectée dans le générateur de vapeur par la pompe 18. Cette eau alimentaire de secours est injectée dans le générateur de vapeur en présence d'un signal de bas débit d'eau alimentaire si la puissance du réacteur est supérieure à une valeur qui par exemple peut être réglée à environ 30% de la puissance nominale.

Cette eau alimentaire de secours est essentiellement utilisée pour continuer l'échange thermique dans le générateur de vapeur et de ce fait continuer à extraire des calories du circuit primaire du réacteur.

Dans le cas où le débit d'eau alimentaire devient inférieur à une valeur de seuil prédéterminée, certaines actions sont entreprises, telles que l'arrêt de la turbine, le démarrage de l'injection de l'eau alimentaire de secours, déjà cité auparavant, l'ouverture partielle du circuit de vapeur de contournement de la turbine, l'arrêt des purges dans les générateurs de vapeur et le déclenchement de l'ordre d'arrêt d'urgence du réacteur.

L'arrêt de la turbine se fait par la fermeture de la vanne d'admission 19 et le contournement vapeur par l'ouverture de la vanne 20. Pour simplifier la compréhension une seule vanne est représentée sur la figure 1.

Les purges dans les générateurs de vapeur sont faites par des tubulures 21 dans la partie secondaire de ces générateurs. Leur but est de permettre un contrôle de la composition de l'eau alimentaire et également vérifier qu'il n'y a pas de liaison directe entre les circuits primaire et secondaire.

L'ordre d'arrêt d'urgence du réacteur doit normalement avoir pour effet de provoquer la chute et l'insertion totale de toutes les barres de contrôle.

Les autorités de sûreté et notamment "l'AMERICAN NUCLEAR SOCIETY" ont défini des types d'incidents qui sont susceptibles de se produire pendant un transitoire de fonctionnement. Un de ces incidents est la perte d'eau alimentaire dans un générateur de vapeur non suivie d'un arrêt d'urgence. Dans cette hypothèse, la configuration la plus contraignante est celle où l'ensemble des grappes de contrôle n'est pas totalement inséré pour des raisons d'ordre électriques (si le disjoncteur d'arrêt d'urgence ne répond pas à l'ordre reçu) ou d'ordre mécanique (si un obstacle quelconque s'oppose à la chute des grappes de contrôle et d'arrêt).

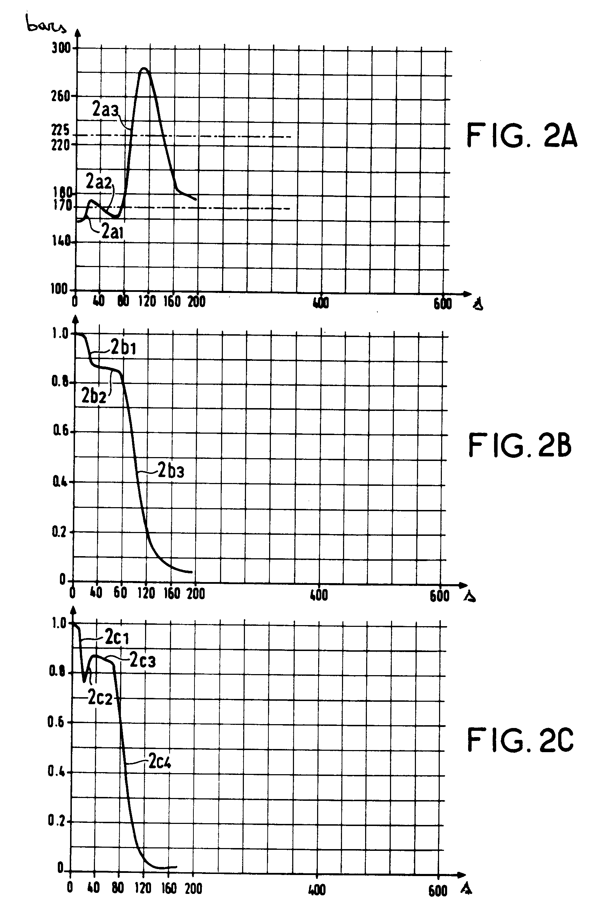

On va se référer à la figure 2 pour comprendre les phénomènes qui se produisent dans la chaudière dans le cas d'un arrêt d'eau alimentaire sans que l'ordre d'arrêt d'urgence soit exécuté. Comme expliqué ci-dessus, l'arrêt de l'eau alimentaire provoque un arrêt de la turbine d'entraînement du générateur par fermeture de la vanne d'admission.

De ce fait le débit de vapeur à la sortie des générateurs de vapeur baisse de façon brutale pendant environ 20 secondes comme indiqué par la partie courbe 2c1 sur la figure 2c. A cette diminution de la puissance extraite du générateur de vapeur correspond une élévation de la température dans le circuit primaire du réacteur qui n'est plus refroidi. Il est bien connu que parallèlement à cette élévation de température, correspond une élévation de la pression qui est représentée par la partie 2a1 de la courbe de la figure 2a.

L'élévation de température de l'eau du circuit primaire provoque un effet modérateur, c'est-à-dire qu'elle a un effet négatif sur la réactivité, ce qui se traduit par une diminution de la puissance nucléaire mesurée dans le coeur.

Cette diminution de la puissance nucléaire est représentée par la partie 2b1 de la courbe de la figure 2b et correspond à la première partie des courbes des figures 2a et 2c.

L'ouverture partielle du circuit de contournement de la vapeur vers le condenseur prend effet environ 20 secondes après l'ouverture. La puissance extraite du générateur de vapeur va augmenter légèrement (partie de courbe 2c2) ce qui a pour effet d'abaisser légèrement température et la pression dans le circuit primaire (partie de courbe 2a2).

Comme le générateur de vapeur n'est plus alimenté en eau, très rapidement la puissance extraite à celui-ci va décroître d'abord légèrement (partie de courbe 2c3) et ensuite très fortement (partie de courbe 2c4) jusqu'à assèchement des générateurs de vapeur et avant la mise en service du dispositif d'eau alimentaire de secours.

La température va augmenter très rapidement ainsi que la pression. L'élévation rapide de la température a pour effet de faire diminuer tout aussi rapidement la puissance nucléaire afin d'amener celle-ci à une valeur proche de sa valeur minimale (partie de courbe 2b3). En contrepartie l'élévation de température va être accompagnée d'une élévation également rapide de la pression (partie de courbe 2a3). Celle-ci va très rapidement dépasser la valeur d'ouvertures des soupapes de sûreté qui est fixé à environ 170 bars, mais aussi dépasser la valeur de 225 bars au delà de laquelle le circuit primaire est selon toutes probabilités détérioré, pour atteindre une valeur proche de 285 bars.

Il apparaît qu'une telle situation est dangereuse pour l'intégrité du circuit primaire.

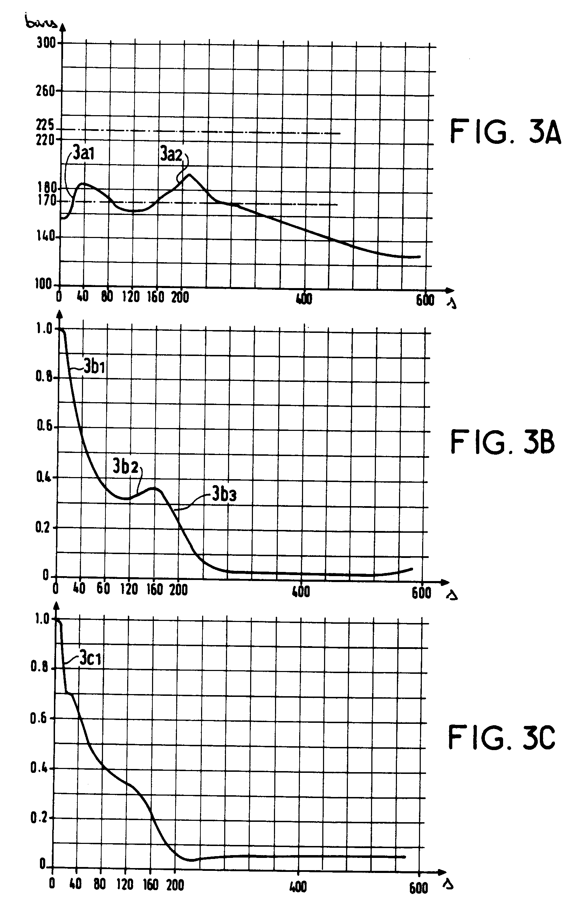

Les courbes de la figure 3, représentent les mêmes variables dans la même hypothèse mais avec application de l'invention.

Dès l'arrêt de l'alimentation en eau alimentaire, la puissance extraite du générateur de vapeur diminue rapidement (partie courbe 3c1). La température va donc augmenter et la pression également (partie courbe 3a1). On voit sur les figures 3a, b, c que les valeurs des paramètres considérés varient lentement pendant environ 20 secondes et plus rapidement après. Selon l'invention, dès le constat de perte la perte d'eau alimentaire associé à une valeur de la puissance du réacteur supérieure à un seuil prédéterminé, un ordre d'arrêt des pompes de circulation 3 du fluide primaire est donné.

L'effet de cet ordre d'arrêt n'est pas immédiat. L'inertie des groupes motopompe les maintient en rotation pendant un certain temps mais leur vitesse décroît rapidement.

Les effets conjugués de l'arrêt de la turbine d'une part et de l'arrêt des pompes d'autre part font que l'extraction de la chaleur du générateur de vapeur décroît plus rapidement que dans le cas du procédé connu.

La pression augmente de façon significative et la température également. Celle-ci augmente d'autant plus rapidement dans le réacteur que le fluide primaire ne circule pas. La partie de courbe 3b1 montre une décroissance rapide de la puissance du réacteur qui ne marque pas de palier quand l'ouverture partielle du circuit de contournement vapeur de la turbine prend effet environ 20 secondes après l'incident. La pression va donc marquer un premier pic supérieur à la pression de tarage des soupapes et décroître sans atteindre la limite de résistance du circuit primaire.

Au bout de 120 secondes la pompe 18 d'alimentation en eau de secours démarre, ce qui provoque un ralentissement de la décroissance de la puissance extraite dans les générateurs de vapeur 2. De ce fait la température du circuit primaire va décroître ce qui va entraîner une légère remontée de la puissance nucléaire d'où une remontée de la température et de la pression jusqu'à une valeur de 190 bars.

La température remontant, l'effet modérateur de celle-ci provoque une chute de la puissance nucléaire jusqu'à une valeur proche de 5 %.

On voit en comparant les courbes des figures 2 et 3 que le fait d'arrêter les pompes primaires dès le constat de défaut d'eau alimentaire au temps 0 provoque une chute de la puissance nucléaire, (courbe 3b ) beaucoup plus rapide qu'auparavant (courbe 2b). Le deuxième pic de pression 3a2 qui apparaît dans le procédé selon l'invention débute à 160 secondes alors que la puissance du coeur est d'environ 35% de sa valeur nominale (courbe 3b). Par comparaison avec le procédé connu le second pic de pression débute à 80 secondes alors que la puissance du coeur est proche de 80%. On voit clairement que le fait d'arrêter rapidement les pompes primaires permet, en raison de l'effet modérateur, une diminution plus rapide de la puissance nucléaire donc de la température et de la pression dans le circuit primaire et que la valeur de pression maximale atteinte ne met en aucun cas en danger l'intégrité du circuit primaire.

En complément à cette action d'arrêt des pompes primaires 3 une addition d'acide borique dans le circuit primaire contribue au retour du réacteur à un état sur. Cette addition d'acide borique se fait de façon connue par le circuit de contrôle volumétrique et chimique normalement prévu à cet effet.

Les courbes des figures 2 et 3 sont établies pour une valeur de puissance de réacteur de 100% au moment de l'incident. L'invention reste cependant utile pour des valeurs de puissance inférieures. Toutefois au dessous d'un certain seuil de puissance, le débit d'eau alimentaire est faible et peut atteindre le seuil minimal. On ne doit donc pas alors lancer les diverses actions de protection indiquées ci-dessus. La figure 4 représente le schéma logique du dispositif selon l'invention qui évite dans ce cas de lancer ces actions.

Un système 50 mesure la puissance nucléaire du réacteur 1 et fournit un signal de valeur logique binaire 1 si cette puissance est supérieure à un seuil prédéterminé (par exemple 30 % de la puissance nominale). Un système 52 mesure le débit de l'eau alimentaire "dite normale" qui est fournie par la pompe 16 et qui circule effectivement dans le générateur de vapeur 2. Il contribue à l'élaboration d'un premier signal d'arrêt d'urgence envoyé en 53 au dispositif 1B, et associé à d'autres signaux élaborés en 56 à partir d'autres paramètres physiques. Il fournit à travers un circuit de retard 55, un signal de valeur logique binaire 1 si le débit est inférieur au seuil minimal précédemment mentionné. Ces deux signaux sont reçus par une porte "ET" 54 qui, si ces deux signaux a son entrée valent 1, lance des ordres pour les actions suivantes.

Arrêt des pompes primaires.

Démarrage de la pompe d'eau alimentaire de secours 18.

Fermeture d'une partie non représentée du circuit de contournement de vapeur incluant la vanne 20.

Arrêt des purges des générateurs de vapeur 2.

Lancement d'un ordre redondant d'arrêt d'urgence au dispositif 1B.

**Revendications**

1. Procédé de protection d'un réacteur nucléaire à eau pressurisée contre les défaillances de son dispositif d'arrêt d'urgence, le réacteur à protéger comportant
   - un coeur (1C) qui est la siège d'une réaction nucléaire,
   - des barres de contrôle et/ou d'arrêt (1A) pouvant pénétrer dans ce coeur,
   - ledit dispositif d'arrêt d'urgence (1B), ce dispositif étant apte à répondre à un ordre d'arrêt d'urgence en faisant pénétrer ces barres dans ce coeur de manière à arrêter cette réaction,
   - et un circuit de refroissement primaire (1, 2, 3, 4, 5) pour refroidir ce coeur par une eau primaire sous pression qui est entraînée par au moins une pompe primaire (3),
   - ce procédé comportant les opérations suivantes :

   - détection (52) d'un incident éventuel d'une espèce dangereuse qui laisse d'abord subsister ledit circuit de refroidissement primaire du réacteur mais qui risque, après l'écoulement d'un délai, de faire monter la température et la pression dans ce circuit à des valeurs dangereuses susceptibles de le détériorer,
   - et envoi (53) d'un dit ordre d'arrêt d'urgence en cas de détection d'un tel incident,
   - ce procédé étant caractérisé par le fait qu'il comporte en outre les opérations suivantes après le dit envoi d'ordre d'arêt d'urgence :
   - surveillance de l'exécution dudit ordre d'arrêt d'urgence avec élaboration (50) d'un signal de défaillance du dispositif d'arrêt d'urgence (13) si cet ordre n'a pas été executé,
   - et arrêt de ladite pompe primaire (3) en réponse à ce signal de défaillance, de manière qu'une élévation rapide et limitée de la température de l'eau dans ledit coeur (1C) ralentisse ladite réaction nucléaire suffisamment tôt pour empêcher cette température d'atteindre une dite valeur dangereuse après l'écoulement dudit délai.

2. Procédé selon la revendication 1, ce procédé étant applicable à un réacteur comportant en outre au moins un générateur de vapeur (2) qui d'une part est parcouru par ladite eau primaire et qui d'autre part reçoit une eau alimentaire d'un circuit secondaire pour refroidir cette eau primaire,
   - ce procédé comportant une surveillance du débit de ladite eau alimentaire,
   - et ladite détection d'un incident d'une espèce dangereuse lorsqu'une diminution dangereuse de ce débit est constatée.

3. Procédé selon la revendication 2, caractérisé en ce que ladite pompe primaire (3) est arrêtée lorsqu'à la fois ladite diminution dangereuse du débit d'eau alimentaire a entraîné (53) l'envoi d'un dit ordre d'arrêt d'urgence, un temps prédéterminé (55) s'est écoulé depuis cet envoi, et un dit signal de défaillance est présent (50),
   - ce signal étant représentatif du fait que la puissance de ladite réaction nucléaire est supérieure à un seuil prédéterminé après l'écoulement de ce temps prédéterminé.

4. Procédé selon la revendication 3, caractérisé par le fait que ledit arrêt de ladite pompe primaire (3) est accompagné d'un ordre redondant d'arrêt d'urgence de manière à faire pénétrer lesdites barres (1A) dans ledit coeur (1C) pour arrêter ladite réaction nucléaire.

## Claims

1. Method of protecting a pressurised water reactor against emergency shutdown system failure, the reactor to be protected comprising
   - a core (1C) in which a nuclear reaction takes place,
   - control rods (1A) adapted to be inserted into the core,
   - said emergency shutdown system (1B), this system being adapted to respond to an emergency shutdown instruction by causing the bars to be inserted into the core in order to halt the reaction, and
   - a primary cooling circuit (1, 2, 3, 4, 5) for cooling the core using pressurized primary water supplied by at least one primary pump (3),
   - this method comprising the following operations:
   - detecting (52) any hazardous incident which initially allows said primary cooling circuit to continue to operate but which may, after a period of time, cause the temperature and the pressure in this circuit to rise to hazardous values likely to damage it, and
   - sending (53) an emergency shutdown instruction in response to detection of any such incident,
   - this method being characterised in that it further comprises the following operations after said emergency shutdown instruction is sent:
   - monitoring execution of said emergency shutdown instruction and generating (50) a signal indicating failure of the emergency shutdown system (13) if this instruction is not executed, and
   - stopping said primary pump (3) in response to this failure signal so that a fast and limited increase in the temperature of the water in said core (1C) slows down said nuclear reaction sufficiently soon to prevent this temperature reaching a hazardous value after said time period.

2. Method according to claim 1 applicable to a reactor further comprising at least one steam generator (2) through which said primary water flows and which receives feed water from a secondary circuit to cool the primary water,
   - this method comprising monitoring of the flowrate of said feed water, and
   - said detection of a hazardous incident if a hazardous reduction in this flowrate occurs.

3. Method according to claim 2 characterised in that said primary pump (3) is stopped when said hazardous reduction in the feed water flowrate has caused (53) an emergency shutdown instruction to be sent, a predetermined time has elapsed since the instruction was sent and said failure signal is present (50),
   - this signal representing the fact that the power of said nuclear reactor is above a predetermined threshold after the predetermined time has elapsed.

4. Method according to claim 3 characterised in that stopping of said primary pump (3) is accompanied by a redundant emergency shutdown instruction so as to cause said control rods (1A) to be inserted into said core (1C) to stop said nuclear reaction.

## Patentansprüche

1. Verfahren zum Schutz eines Druckwasserkernreaktors gegen das Ausfallen seiner Notstoppvorrichtung, wobei der zu schützende Reaktor aufweist:
   - einen Reaktorkern (1C), in dem die Kernreaktion stattfindet,
   - Steuer- und/oder Stoppstäbe (1A), die in den Reaktorkern eindringen können,
   - die Notstoppvorrichtung (1B), wobei diese Vorrichtung auf einen Notstoppbefehl anspricht, indem sie die Stäbe in den Kern so eindringen läßt, daß die Kernreaktion gestoppt wird, und
   - einen Primärkühlkreislauf (1, 2, 3, 4, 5), um den Kern durch Primärdruckwasser abzukühlen, das durch mindestens eine Primärpumpe (3) umgewälzt wird, wobei das Verfahren folgende Schritte aufweist:
   - Erfassen eines eventuellen Zwischenfalls gefährlicher Art, wobei zuerst der Primärkühlkreislauf des Reaktors bestehen bleibt, jedoch nach Ablauf eines Zeitintervalls die Gefahr besteht, daß die Temperatur und der Druck in dem Kreislauf auf gefährliche Werte steigen, die diesen zerstören können,

- und Entsenden (53) des Notstoppbefehls im Falle der Erfassung eines solchen Störfalls,

**dadurch gekennzeichnet,**

daß ferner folgende Schritte nach dem Absenden des Notstoppbefehls erfolgen:

- Überwachen der Ausführung des Notstoppbefehls mit der Erstellung (50) eines Signals eines Fehlers der Notstoppvorrichtung (13), wenn dieser Befehl nicht ausgeführt wurde, und
- Anhalten der Primärpumpe (3) in Erwiderung auf dieses Fehlersignal, derart, daß eine schnelle und begrenzte Steigerung der Temperatur des Wassers in dem Kern (1C) die Kernreaktion ausreichend früh verlangsamt, um zu verhindern, daß diese Temperatur den besagten gefährlichen Wert nach Ablauf des Zeitintervalls erreichen kann.

2. Verfahren nach Anspruch 1, wobei dieses Verfahren anwendbar ist bei einem Reaktor, der ferner einen Dampferzeuger (2) aufweist, der einerseits von dem Primarwasser durchströmt wird und der andererseits Speisewasser eines Sekundärkreises zum Abkühlen des Primarwassers aufnimmt, wobei dieses Verfahren eine Überwachung des Durchsatzes des Speisewassers beinhaltet, und

- die Erfassung eines gefährlichen Störfalls während einer gefährlichen Verringerung dieses Durchsatzes festgestellt wird.

3. Verfahren nach Anspruch 2, dadurch gekennzeichnet, daß die Primärpumpe (3) angehalten wird, wenn gleichzeitig die gefährliche Verringerung des Speisewasserdurchsatzes die Auslösung eines Notstoppbefehls (53) ausgelöst hat und eine vorbestimmte Zeit (55) seit dieser Auslösung vergangen ist und das Fehlersignal (50) vorliegt,

- wobei dieses Signal den Umstand wiedergibt, daß die Leistung des Kernreaktors größer als ein vorbestimmter Schwellenwert nach Ablauf eines vorbestimmten Zeitintervalls ist.

4. Verfahren nach Anspruch 3, dadurch gekennzeichnet, daß der Stopp der Primärpumpe (3) von einem Notstoppbefehl begleitet wird, der die Stäbe (1A) in den Reaktorkern (1C) eindringen läßt, um die Kernreaktion zu stoppen.

# FIG. 1

# FIG. 4

EP 0 306 725 B1

FIG. 2A

FIG. 2B

FIG. 2C

10

FIG. 3A

FIG. 3B

FIG. 3C